# EUROPÄISCHE PATENTSCHRIFT

(11) **EP 0 615 825 B1**
(45) Veröffentlichungstag und Bekanntmachung des Hinweises auf die Patenterteilung: **04.11.1998**
(21) Anmeldenummer: 94103564.4
(22) Anmeldetag: 09.03.1994
(51) Int. Cl.: B29C 39/24, B29C 31/06

(54) **Verfahren und Vorrichtung zum Füllen von Giessformen mit Giessharz o. dgl. giessfähig flüssigen Medien**
Method and apparatus for filling moulds with casting resin or similar castable fluids
Méthode et appareil pour remplir des moules avec une résine de coulée ou des fluides similaires coulables

(30) Priorität: 14.03.1993 DE 4307919; 18.03.1993 DE 4308651; 04.06.1993 DE 4318496
(43) Veröffentlichungstag der Anmeldung: 21.09.1994
(73) Patentinhaber: WILHELM HEDRICH VAKUUMANLAGEN GmbH & Co. KG, D-35630 Ehringshausen-Katzenfurt (DE)
(72) Erfinder: Häuser, Erhard, D-35641 Schöffengrund (DE); Steindorf, Hans-Joachim, D-35764 Sinn (DE)
(74) Vertreter: Müller, Eckhard, Dr.

(56) Entgegenhaltungen:
- EP-A- 0 478 876
- DE-A- 4 029 193
- FR-A- 2 666 272
- GB-A- 2 005 589
- US-A- 4 279 360
- US-A- 5 187 001

## Beschreibung

Die Erfindung bezieht sich auf ein Verfahren zum Füllen von Gießformen mit Gießharz o. dgl. gießfähig flüssigen Medien gemäß dem Oberbegriff des Anspruches 1 sowie auf eine Vorrichtung zur Durchführung des Verfahrens gemäß dem Oberbegriff des Anspruches 8.

Bei der Verarbeitung von Gießharzformstoffen in der Druckgeliertechnik werden die Gießharzformstoffe entweder aus Druckgefäßen oder über Mehrkomponenten-Dosier- und/oder Mischanlagen der oder den jeweiligen Gießformen zugeführt. Bei Einsatz eines Druckgefäßes wird die in einem Chargenmischer angesetzte Gießmasse, die in der Regel zuvor unter Vakuum aufbereitet wurde, in das Druckgefäß eingefüllt und zur Verarbeitung mit Preßluft beaufschlagt, um zum einen die Gießmasse aus dem Druckgefäß in die Gießform zu transportieren und zum anderen den Nachdruck auf die Form während der Gelierphase aufrechtzuerhalten. Das Druckgefäß weist üblicherweise einen für eine Anzahl der Gießlinge ausreichenden Nutzinhalt aus, wobei die Gießlinge nacheinander im zeitlichen Abstand gegossen werden. Dies führt dazu, daS die Gießmasse bei der Verarbeitung unterschiedlich gealtert und damit auch in entsprechender Weise unterschiedlich viskos ist. Bei der Herstellung der Gießlinge muß aber eine gleichbleibende Qualität sichergestellt sein, was eine konstante Füllgeschwindigkeit der nacheinander gefertigten Gießlinge erfordert. Aufgrund der sich im Laufe der Zeit ergebenden Viskositätsänderungen der Gießmasse muß demzufolge die Druckbeaufschlagung immer wieder nachreguliert werden, damit die Füllgeschwindigkeit der nacheinander gefertigten Gießlinge nicht stärker voneinander abweicht. Ein weiterer Nachteil bei derartigen Druckgefäßen ist, daß es durch die Preßluftbeaufschlagung zu einer mehr oder minder starken Wiederbegasung der zuvor unter Vakuum aufbereiteten Gießmasse kommt.

Es sind aber auch bereits Druckgefäße bekannt, bei denen, wie in der EP 47 88 76 A1 beschrieben, die Gießmasse ohne direkte Berührung mit Preßluft unter Druck gesetzt wird. Aber auch hier besteht der Nachteil, daß sich durch die über die Zeit alternde Formmasse Qualitätsunterschiede der Gießlinge einstellen, insbesondere wenn dadurch die Füllzeiten stärker variieren.

Bei Mehrkomponentenanlagen, wie sie bspw. in der DE 27 48 982 C3 beschrieben sind, ist schon ein Füllen stets frischer Gießmasse ohne Luftberührung bis an bzw. in die Gießform bekannt, wodurch insoweit die Füllgeschwindigkeit konstant gehalten wird, sofern nur die Masseviskosität in der Leitungsführung konstant bleibt. Dies ist aber über einen längeren Betriebszyklus nur schwierig einzuhalten.

Da die mit der Druckgeliertechnik hergestellten Gießlinge hauptsächlich als Isolierteile in der Elektrotechnik eingesetzt werden, bedeutet bei vielen Produkten der Einschluß auch kleinster Luftbläschen bereits Ausschuß bzw. verminderte Qualität.

Aus der US-PS 5 187 001 ist eine Vorrichtung zur Zuführung von Gießharz in eine Form bekannt mit einer Dosierpumpe und einer der Dosierpumpe zugeordneten Regelung, welche es ermöglicht, die Füllrate und den Druck des Gießharzes während des Injektionszyklusses einem Profil zu unterwerten oder zu variieren. Nachteil der bekannten Vorrichtung ist jedoch, daß das Füllvolumen auf einen Hub der Dosierpumpe begrenzt ist. Eine ähnliche Vorrichtung ist aus der DE 40 29 193 A1 bekannt, bei welcher die Aufbereitung des Gießharz aus Einzelkomponenten durch wenigstens zwei Dosierpumpen bzw. über einen Durchlaufmischer erfolgt, von welchem aus die fertige Masse der jeweiligen Gießform zugeführt wird.

Davon ausgehend liegt der Erfindung die Aufgabe zugrunde, die Formenfüllvorgänge vorprogrammiert und genau reproduzierbar hinsichtlich Füllgeschwindigkeit, d. h. Durchsatzmenge an Gießharz pro Zeiteinheit, auszuführen, um insbesondere bei schwierig zu füllenden Gießlingen die notwendigen Füllbedingungen zu sichern, unabhängig von der Geschicklichkeit des jeweiligen Maschinenbedieners.

Bei einem Verfahren zum Füllen von Gießformen mit Gießharz o. dgl. gießfähig flüssigen Medien mittels einer eine Pumpeinrichtung aufweisenden Zufuhreinrichtung und einem der Zufuhreinrichtung nachgeschalteten Pufferelement ist es nach der Erfindung vorgesehen, daß sich die Förderrate der Pumpeinrichtung im Pufferelement in eine vorgegebenen Füllrate für die Gießform und eine Speicherrate des Pufferelementes aufteilt, wobei die im Pufferelement während der Förderbewegung jeweils gespeicherte Gießharzmenge während der Ansaugbewegung der Pumpeinrichtung entsprechend der vorgegebenen Füllrate zur Gießform gefördert wird, bis die erneute Förderbewegung der Pumpeinrichtung einsetzt. Hierdurch wird ein kontinuierlicher durchsatzgesteuerter Füllstrom erzeugt, so daß auch bei Dosieranlagen eine außerordentliche Verbesserung und Vergleichmäßigung der Produktqualität erreicht ist. Dabei wird das Hubvolumen der Pumpen in exakt festgelegter Zeit, bspw. über einen Durchlaufmischer an das Pufferelement weitergegeben, wobei das Pufferelement entsprechend der vorgegebenen Pufferaustrittsrate eine auf die Fördergeschwindigkeit der Pumpen abgestimmte Füllbewegung, bspw. mit einem Positionierantrieb, ausführt. Dieser Zustand läßt sich durch folgende Gleichung definieren: Pufferspeicherrate = Pumpenförderrate - Pufferaustrittsrate. Während der Ansaugbewegung der Pumpeinrichtung führt das Pufferelement eine Entleerungsbewegung mit dem Sollwert der Pufferaustrittsrate durch. Bevor es zu einer Entleerung des Pufferelementes kommt, fördern die Pumpen bzw. die Pumpeinrichtung erneut und parallel dazu verläuft das Speichern von Gießmasse im Pufferelement. Insoweit ist es aber auch denkbar, daß das Pufferelement ein solches Volumen aufweist, daß die Gießform in einem Entleerungsvorgang des Pufferelementes gefüllt und druckgeliert werden kann. Durch diese zwangsgesteuerten volumetrischen Abläufe, deren Parameter, bspw. in einer Steuerung einprogrammierbar und abrufbar sind, werden auch dann stabile Flußraten während des Füllvorgangs erreicht, wenn sich z. B. der Durchflußwiderstand von Pufferelement zur Gießform verändert. Insgesamt ist das Zusammenspiel der Pumpeinrichtung mit Pufferelement so aufeinander abgestimmt, daß die Ausstoßgeschwindigkeit von Gießharz an der Pumpeinrichtung und die Füllgeschwindigkeit des Pufferelementes gerade die geforderte momentane Flußrate an der Gießmündung der Gießform bewirken und die Geschwindigkeit, mit welcher das Pufferelement während des Ansaugvorganges der Pumpeinrichtung entleert wird, gerade die geforderte momentane Flußrate an der Gießmündung aufrechterhält.

In einer ersten Ausgestaltung der Erfindung ist es vorgesehen, daß das Gießharz zwangsgesteuert, bspw. mittels vorgegebenen Hubbewegungen der Pumpeinrichtung, zugeführt wird.

Im Gegensatz zu dieser von außen vorgegebenen zwangsgesteuerten Zugabe kann es alternativ auch vorgesehen sein, daß die tatsächliche Füllrate an Gießharz ermittelt und bei einer Abweichung von dem vorgegebenen Sollwert die Füllrate nachgeregelt wird. Auch ist eine Kombination zwischen zwangsgesteuerter und geregelter Verfahrensweise denkbar.

Dabei wird nach einem Vorschlag der Erfindung die tatsächliche Füllrate zur Gießform über die Bewegung des Verdrängungselementes des Pufferelementes festgelegt. Diese Variante kann bspw. dann mit Vorteil eingesetzt werden, wenn das Speichervolumen des Pufferelementes wenigstens der zum Füllen einer Gießform erforderlichen Gießharzmenge entspricht, so daß nach erfolgter Speicherung die Füllrate zur Gießform allein durch die Bewegung des Verdrängungselementes des Pufferelementes in der gewünschten Weise festgelegt wird.

Nach einem weiteren Vorschlag der Erfindung ist es vorgesehen, daS die Förderbewegungen der Pumpeinrichtung und die Bewegungen des Verdrängungselementes des Pufferelementes in Abhängigkeit des vorgegebenen Füllprofils erfolgen. Bei kleineren Speichervolumen des Pufferelementes oder größeren Gießformen sind mehrere Förderbewegungen der Pumpeinrichtung und des Pufferelementes erforderlich, welche in einem koordinierten Ablauf stattfinden müssen, um das vorgegebene Füllprofil zu realisieren.

Weiterhin ist es nach der Erfindung vorgesehen, daß in Abhängigkeit der Regelgröße für die Füllrate eine stromab der Zufuhreinrichtung bzw. des Pufferelementes angeordnete Durchflußmengenregulierung betätigt wird. Hierdurch wird den tatsächlichen Verhältnissen an der Gießmündung im Hinblick auf das vorgegebene Füllprofil Rechnung getragen, ungeachtet dessen, ob ein Druckgefäß oder eine Zufuhreinrichtung, wie bspw. eine Dosieranlage, mit nachgeschaltetem Pufferelement vorgesehen ist.

Vorrichtungsmäßig wird die Aufgabe dadurch gelöst, daß die Arbeitsbewegungen von Pumpeinrichtung und Pufferelement zwangsgekoppelt sind mit vorwählbarem und während des Füllvorgangs ggf. veränderbarem Kopplungsverhältnis. Die Bewegungen von Pumpeinrichtung und Pufferelement können mechanisch aber auch elektrisch oder elektronisch miteinander gekoppelt sein, um durch die aufeinander abgestimmten Arbeitsbewegungen das gewünnschte Füllprofil an der Gießmündung zu erreichen. Zur Koordination der Arbeitsbewegungen von Pumpeinrichtung und Pufferelement kann selbstverständlich auch eine Mehrachsenbahnsteuerung vorgesehen sein. Die Antriebe für Pumpeinrichtung und Pufferelement können bspw. durch Achs- und/oder Positionierantriebe erfolgen.

Im Rahmen der Erfindung liegt es auch, daß eine Regeleinrichtung vorgesehen ist, welche in Abhängigkeit eines Soll-/Istwertvergleiches die Füllrate regelt. Durch eine derartige Regeleinrichtung ist den sich verändernden Verhältnissen an der Gesamtvorrichtung Rechnung getragen, wenn sich bspw. der Durchflußwiderstand zwischen Pufferelement und Gießform verändert, so daß die Hubkraft des Pufferelementes und der Pumpeinrichtung erhöht oder entsprechend gesenkt werden muß. Selbstverstandlich kann im Falle eines Druckgefäßes die Steuereinrichtung auch auf eine stromauf der Gießmündung angeordnete Durchflußmengenregulierung einwirken oder bspw. die Größe des Fluiddrucks in einem Druckgefäß nachregeln.

Schließlich lehrt die Erfindung eine Vorrichtung zur Ermittlung der Flußrate von gießfähig flüssigen Medien, wie bspw. Gießharz, wobei ein Pufferelement vorgesehen ist, mit einem bei einer Zunahme der Zuflußrate zum Pufferelement im Sinne einer Vergrößerung des Speichervolumens des Pufferelementes ausweichendem und bei einer Abnahme der Zuflußrate zum Pufferelement im Sinne einer Speichervolumenverkleinerung zurückweichenden Verdrängungselement und einer Einrichtung zur Ermittlung der zeitlichen Füllstandsänderung bzw. -änderungen des Speichervoluments des Pufferelementes. Im Falle, daß die Zufuhrrate zum Pufferelement den Wert Null aufweist, wie bspw. während des Ansaugtaktes der Förderpumpen, ergibt sich die Flußrate aus dem Pufferelement aus der zeitlichen Änderung des Füllstandes im Pufferelement. Hat dagegen die Zuflußrate am Puffereingang eine endliche Größe, wie etwa während der Förderbewegung der Pumpeinrichtung, ergibt sich die Flußrate am Ausgang des Pufferelementes bei bekannter Zuflußrate aus der zeitlichen Änderung des Speichervolumens im Pufferelement und der Richtung der Bewegung des Verdrängungselementes des Puffers.

Die Erfindung wird nachfolgend anhand der in den Zeichnungen dargestellten Ausführungsbeispielen näher beschrieben.

Es zeigen:
- Figur 1: einen Mischbehälter mit einer außerhalb desselben angeordneten Pumpe und einer Zuführungsleitung,
- Figur 2: eine Anordnung mit zwei Vorratsbehältern, Zufuhreinrichtung sowie Gießform,
- Figur 3: ein Pufferelement zum gesteuerten Füllen der Gießformen,
- Figur 4: ein Druckgefäß mit einer Einrichtung zum Regeln des Füllvorganges einer Gießform und
- Figur 5: eine weitere Möglichkeit einer geregelten Füllung einer Gießform mit Hilfe eines Druckgefäßes.

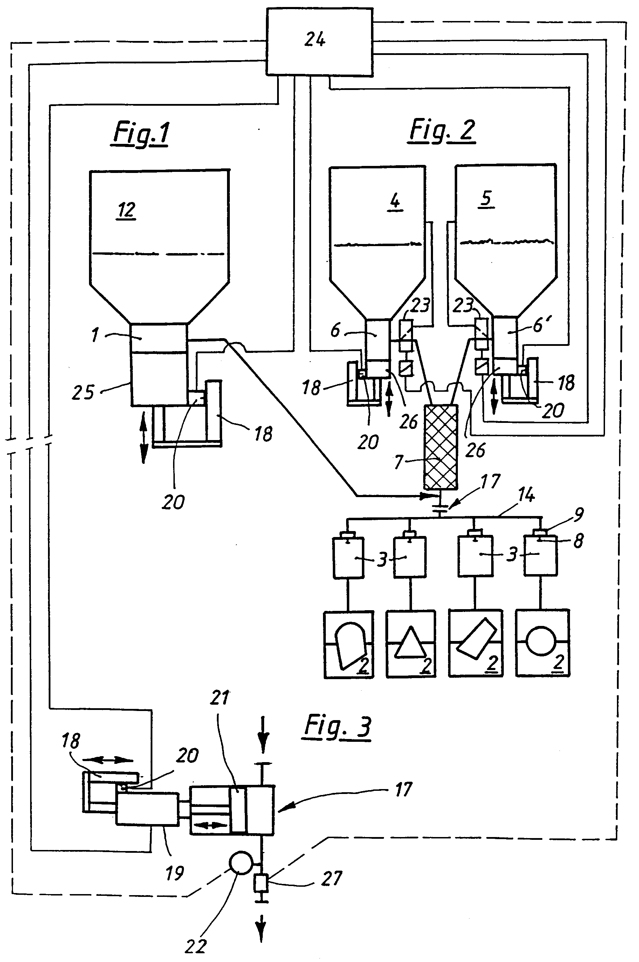

Figur 1, die im Zusammenhang mit dem unteren Teil der Figur 2 steht, zeigt einen Mischbehälter 12, in dem sich gießfähige Masse befindet, welche aus mehreren miteinander vermischten Komponenten bestehen kann. Der Mischbehälter 12 kann evakuierbar sein. An den Mischbehälter 12 ist eine Pumpe 1 angeschlossen, die vergießbare Masse zu einer Verteilerleitung 14 fördert. Am Eintritt in die Verteilerleitung 14 befindet sich ein Pufferelement 17. An die Verteilerleitung 14 sind insgesamt vier Puffer 3 angeschlossen. Von den Puffern 3 aus fließt das zu vergießende Material in Gießformen 2, die verschiedene Volumina aufweisen können.

Figur 2 zeigt eine Anordnung mit zwei Vorratsbehältern 4, 5. Es können auch weitere Vorratsbehälter vorgesehen werden. Jedem Vorratsbehälter 4, 5 ist eine Dosierpumpe 6 bzw. 6' zugeordnet. Die Dosierpumpen 6, 6' fördern die in den Vorratsbehältern 4, 5 befindlichen Komponenten zu einer Mischkammer 7, an welche sich das Pufferelement 17 anschließt. Vom Pufferelement 17 aus gelangt die jetzt reaktive Gießmasse in die Verbindungsleitung 14 und von da in die Puffer 3, welche als Druck-Masse-Speicher wirken. Die Bedeutung und Wirkungsweise dieser mit einer Einlaßöffnung 8, einem Ventil 9, einem Kolben, einer Druckmedien-Einlaßöffnung und Steuerkontakten ausgerüsteten Puffern 3 ist ausführlich in der DE 27 48 982 C3 beschrieben, so daß sich ein Eingehen hierauf erübrigt.

Das Pufferelement 17 wirkt bei dem Ausführungsbeispiel gemäß Figur 1 mit der Förderpumpe 1 und im Falle des Ausführungsbeispieles gemäß Figur 2 mit den Dosierpumpen 6, 6' derart zusammen, daß während der Förderpumpen- bzw. Dosierpumpenförderung mit vorgewählter bzw. vorberechneter Geschwindigkeit zum Pufferelement 17 ein gewünschter Teilstrom vom Pufferelement 17 über die Verteilerleitung 14 und die einzelnen Puffer 3 zur Gießform 2 fließt, während der Rest des Förderstromes synchron im Pufferelement 17 gespeichert wird. Dieser Rest an Gießharzformstoff wird während der sogenannten Saugbewegung der Förderpumpe 1 bzw. der Dosierpumpen 6, 6' mit gewünschter, d. h. vorgewählter oder bspw. programmierter Geschwindigkeit aus dem Pufferelement 17 über den jeweiligen Puffer 3 in die entsprechenden Gießformen 2 entleert, so daß ein kontinuierlicher durchsatzgesteuerter Füllstrom entsteht.

Zwischen der Förderpumpe 1 bzw. den Dosierpumpen 6, 6' und dem Pufferelement 17 ist eine Antriebskopplung vorgesehen. Hierdurch kommt es während des Förderhubes der Förderpumpe 1 zu einer synchronen Füllbewegung des Pufferelementes 17, wobei sich sein Kolben 21 bei der Darstellung gemäß Figur 3 nach links bewegt. Für die steuerungsmäßige Kopplung der Funktionsteile 17, 1 bzw. 6, 6' ist eine zentrale Steuerung 24 vorgesehen. Für die Förderbewegung der Pumpen 1 bzw. 6, 6' und für die Hubbewegung des Pufferelementes 17 sind Positionierantriebe 19, 25 und 26 vorgesehen, welche während des Förderhubes der Pumpe 1 bzw. der Dosierpumpen 6, 6' mit dem Pufferantrieb 19 zwangsgekoppelt zusammenarbeiten. Dabei ist mit Bezugszeichen 20 eine Skala 18 aufweisender Ingrementalgeber bezeichnet, welcher die Hubweglängen in Einzelimpulse auflösen und damit Änderungen des Hubweges und auch ihrer Richtung der Steuerung 24 signalisiert.

Die Absperrventile 23 gemäß Figur 2 dienen der Absperrung der Zufuhr an Gießharzformmasse während des Saughubes der Pumpen 6, 6' gegenüber dem Pufferelement 17; ihre Funktionsweise ergibt sich im übrigen aus der DE 41 27 547 A1.

Alternativ zu der in Figur 2 dargestellten Ausführungsform mit stromaufwärts der einzelnen Puffer 3 angeordnetem Pufferelement 17 ist es selbstverständlich auch möglich, daß anstelle der Puffer 3 jeweils ein Pufferelement 17 vorgesehen ist, welches zugleich auch die Aufgabe der Puffer beim Druckgelieren erfüllt, nämlich nach dem Füllvorgang den Gelierdruck aufrechtzuerhalten und einen eventuellen Schwund auszugleichen.

Wie weiterhin aus Figur 2 ersichtlich, kann stromab des Pufferelementes 17 ein Drucksensor 22 vorgesehen sein, welcher den Vollzustand der Gießform der Steuerung 24 signalisiert.

Auch kann es sich empfehlen, daß in der Gießmasseleitung 14 stromab des Pufferelementes 17 ein Durchflußsensor 27 angeordnet ist. Dieser Durchflußsensor 27 liefert an die zentrale Steuereinrichtung 24 ein Istwertsignal, wodurch der dann als Servoantrieb ausgebildete Antrieb des Pufferelementes 17 in Abhängigkeit der Abweichung des Istwertsignals zum vorgegebenen Sollwertsignal den Durchsatz automatisch nachregelt. In diesem Fall ist zwar noch eine steuerungsmäßige Verknüpfung zwischen den Antrieben der Pumpen 6, 6' und dem Pufferelement 17 vorhanden, jedoch bedarf es dann keiner Zwangskopplung der Antriebe zwischen Pumpen und Pufferelement mehr.

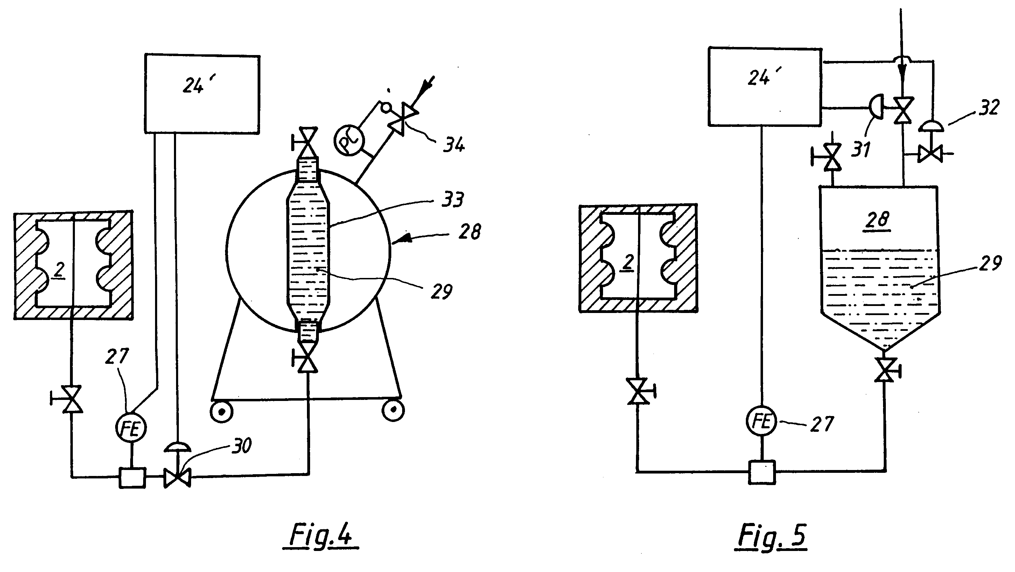

Gemäß Figuren 4 und 5 ist es auch möglich, mittels eines Druckgefäßes 28 ein reproduzierbares Gießen von Druckgelierformen 2 zu erreichen. Auch hierbei wird der tatsächliche Durchsatz an Gießmasse ermittelt und über seine Abweichung von einem Sollwert eine Regulierung bzw. Einstellung der Füllrate vorgenommen.

Gemäß Figur 4 ist ein Druckgefäß 28, welches im übrigen in der EP 47 88 76 A1 beschrieben ist, über ein Regelventil 30 und einen Durchflußsensor 27 an eine Gießform 2 angeschlossen. Das Regelventil 30 wird in Abhängigkeit von der Soll-/Istwertabweichung der Durchflußrate mittels der Steuerung mit Regelung 24' eingeregelt, wodurch sich der Durchflußquerschnitt in der Masseleitung über das Regelventil 30 verändert. Bei dieser Ausführungsform kann im Druckgefäß 28 über ein Druckregelventil 34 ein konstanter Druck vorgegeben werden. Wie weiterhin aus Figur 4 zu ersehen, befindet sich die Gießmasse 29 in einem Schlauch 33 und ist damit von dem Druckmedium getrennt.

Bei dem Ausführungsbeispiel gemäß Figur 5 erfolgt die Einregelung der Abweichung des Gießmassedurchsatzes von einem vorgegebenen Sollwert dadurch, daß Regelventile 31 und 32 für das Druckmittel, üblicherweise Preßluft, ausgeregelt werden.

## Patentansprüche

1. Verfahren zum Füllen von Gießformen (2) mit Gießharz o. dgl. gießfähig flüssigen Medien mittels einer eine Pumpeinrichtung (1; 6, 6') aufweisenden Zufuhreinrichtung und einem der Zufuhreinrichtung nachgeschalteten Pufferelement (17), dadurch gekennzeichnet, daß sich die Förderrate der Pumpeinrichtung (1; 6, 6') im Pufferelement (17) in eine vorgegebene Füllrate für die Gießform (2) und eine Speicherrate des Pufferelementes (17) aufteilt, wobei die im Pufferelement (17) während der Förderbewegung jeweils gespeicherte Gießharzmenge während der Ansaugbewegung der Pumpeinrichtung (1; 6, 6') entsprechend der vorgegebenen Füllrate zur Gießform (2) gefördert wird, bis die erneute Förderbewegung der Pumpeinrichtung (1; 6, 6') einsetzt.

2. Verfahren nach Anspruch 1, dadurch gekennzeichnet, daß das Gießharz zwangsgesteuert zugeführt wird.

3. Verfahren nach Anspruch 1, dadurch gekennzeichnet, daß die tatsächliche Füllrate an Gießharz ermittelt und bei einer Abweichung von dem vorgegebenem Sollwert die Füllrate nachgeregelt wird.

4. Verfahren nach einem der Ansprüche 1 bis 3, dadurch gekennzeichnet, daß die tatsächliche Füllrate zur Gießform (2) über die Bewegung des Verdrängungselementes (21) des Pufferelementes (17) festgelegt wird.

5. Verfahren nach einem der vorhergehenden Ansprüche, dadurch gekennzeichnet, daß die Förderbewegungen der Pumpeinrichtung (1; 6, 6') und die Bewegungen des Verdrängungselementes (21) des Pufferelementes (17) in Abhängigkeit des vorgegebenen Füllprofiles erfolgen.

6. Verfahren nach einem der vorhergehenden Ansprüche, dadurch gekennzeichnet, daß das Pufferelement (17) zur Aufrechterhaltung des auf der Gießform (2) lastenden Gelierdruckes ausgebildet ist.

7. Verfahren nach einem der vorhergehenden Ansprüche, dadurch gekennzeichnet, daß in Abhängigkeit der Regelgröße für die Füllrate eine stromab der Zufuhreinrichtung oder ggf. des Pufferelementes (17) angeordnete Durchflußmengenregulierung (30) betätigt wird.

8. Vorrichtung zum Füllen von Gießformen mit Gießharz oder dgl. gießfähig flüssigen Medien mittels einer eine Pumpeinrichtung (1; 6, 6') aufweisenden Zufuhreinrichtung und einem der Zufuhreinrichtung nachgeschalteten Pufferelement (17), insbesondere zum Durchführen des Verfahrens nach einem der Ansprüche 1 bis 7, dadurch gekennzeichnet, daß die Arbeitsbewegungen von Pumpeinrichtung (1; 6, 6') und Pufferelement (17) zwangsgekoppelt sind mit vorwählbarem und während des Füllvorganges ggf. veränderbarem Kopplungsverhältnis.

9. Vorrichtung nach Anspruch 8, dadurch gekennzeichnet, daß eine Regeleinrichtung (24, 24') vorgesehen ist, welche in Abhängigkeit eines Soll-/Istwert-Vergleichs die Füllrate regelt.

10. Vorrichtung zur Ermittlung der Flußrate von gießfähig flüssigen Medien, wie bspw. Gießharz, dadurch gekennzeichnet, daß ein Pufferelement (17) vorgesehen ist, mit einem bei einer Zunahme der Zuflußrate zum Pufferelement (17) im Sinne einer Vergrößerung des Speichervolumens des Pufferelements (17) ausweichenden und bei einer Abnahme der Zuflußrate zum Pufferelement (17) im Sinne einer Speichervolumenverkleinerung zurückweichenden Verdrängungselement (21) und einer Einrichtung zur Ermittlung der zeitlichen Änderung bzw. Änderungen des Speichervolumens des Pufferelementes (17).

## Claims

1. Method for the filling of casting moulds (2) with casting resin or the like pourable liquid media by means of a feeding equipment displaying a pump equipment (1; 6, 6') and a buffer element (17) connected downstream of the feeding equipment, characterised thereby, that the conveying rate of the pump equipment (1; 6, 6') divides up in the buffer element (17) into a preset filling rate for the casting mould (2) and a storage rate of the buffer element (17), wherein the quantity of casting resin respectively stored in the buffer element (17) during the conveying movement is conveyed to the casting mould (2) in accordance with the preset filling rate during the induction movement of the pump equipment (1; 6, 6') until the renewed conveying movement of the pump equipment (1; 6, 6') sets in.

2. Method according to claim 1, characterised thereby, that the casting resin is fed under constrained control.

3. Method according to claim 1, characterised thereby, that the actual filling rate of casting resin is ascertained and the filling rate is further regulated in the case of a deviation from the preset target value.

4. Method according to one of the claims 1 to 3, characterised thereby, that the actual filling rate to the casting mould (2) is ascertained by way of the movement of the displacing element (21) of the buffer element (17).

5. Method according to one of the preceding claims, characterised thereby, that the conveying movements of the pump equipment (1; 6, 6') and the movements of the displacing element (21) of the buffer element (17) take place in dependence on the preset filling profile.

6. Method according to one of the preceding claims, characterised thereby, that the buffer element (17) is constructed for the maintenance of the gelling pressure loading the casting mould (2).

7. Method according to one of the preceding claims, characterised thereby, that a throughflow quantity regulation (30) arranged downstream of the feeding equipment or, in a given case, of the buffer element (17) is actuated in dependence on the regulating magnitude for the filling rate.

8. Device for the filling of casting moulds (2) with casting resin or the like pourable liquid media by means of a feeding equipment displaying a pump equipment (1; 6, 6') and a buffer element (17) connected downstream of the feeding equipment, in particular for the performance of the method according to one of the claims 1 to 7, characterised thereby, that the operating movements of the pump equipment (1; 6, 6,') and the buffer element (17) are constrainedly coupled with a preselectable coupling ratio which can in a given case be varied during the filling operation.

9. Device according to claim 8, characterised thereby, that a regulating equipment (24, 24') is provided, which regulates the filling rate in dependence on a comparison of target value and actual value.

10. Device for ascertaining the flow rate of pourable liquid media, such as for example casting resin, characterised thereby, that a buffer element (17) is provided, with a displacing element (17), which deviates in the sense of an enlargement of the storage volume of the buffer element (17) in the case of an increase in the flow rate towards the buffer element (17) and which deviates back in the sense of a reduction in the storage volume in the case of a decrease in the flow rate towards the buffer element (17), and with an equipment for ascertaining the temporal change or changes of the storage volume of the buffer element (17).

## Revendications

1. Procédé pour remplir des moules (2) avec une résine de coulée ou avec des milieux liquides susceptibles de coulée du même genre au moyen d'un dispositif d'alimentation qui comprend un dispositif de pompage (1 ; 6, 6') et d'un élément tampon (17) placé en aval du dispositif d'alimentation, caractérisé en ce que le débit de refoulement du dispositif de pompage (1; 6, 6') dans l'élément tampon (17) est divisé en un débit de remplissage prédéterminé pour le moule (2) et un débit d'accumulation de l'élément tampon (17), la quantité de résine de coulée qui est accumulée dans l'élément tampon (17) pendant le mouvement de refoulement étant refoulée dans le moule (2) avec le débit de remplissage prédéterminé pendant le mouvement d'aspiration du dispositif de pompage (1 ; 6, 6') jusqu'à ce que le nouveau mouvement de refoulement du dispositif de pompage (1 ; 6, 6') commence.

2. Procédé selon la revendication 1, caractérisé en ce que la résine de coulée est alimentée sous commande positive.

3. Procédé selon la revendication 1, caractérisé en ce que le débit de remplissage réel de résine de coulée est capté et en ce que le débit de remplissage est corrigé s'il dévie de la valeur de consigne prédéterminée.

4. Procédé selon une des revendications 1 à 3, caractérisé en ce que le débit de remplissage réel envoyé au moule (2) est déterminé par l'intermédiaire du mouvement de déplacement (21) de l'élément tampon (17).

5. Procédé selon une des revendications précédentes, caractérisé en ce que les mouvements de refoulement du dispositif de pompage (1 ; 6, 6') et les mouvements de l'élément de déplacement (21) de l'élément tampon (17) se produisent en fonction du profil de remplissage prédéterminé.

6. Procédé selon une des revendications précédentes, caractérisé en ce que l'élément tampon (17) est conformé pour assurer le maintien de la pression de gélification qui s'exerce sur le moule (2).

7. Procédé selon une des revendications précédentes, caractérisé en ce qu'un dispositif de régulation du débit de passage (30) disposé en aval du dispositif d'alimentation ou éventuellement de l'élément tampon (17) est actionné en fonction de la grandeur réglante pour le débit de remplissage.

8. Dispositif pour remplir des moules avec une résine de coulée ou des milieux liquides susceptibles de coulée du même genre au moyen d'un dispositif d'alimentation qui comprend un dispositif de pompage (1; 6, 6'), et d'un élément tampon (17) placé en aval du dispositif d'alimentation, en particulier pour la mise en oeuvre du procédé selon une des revendications 1 à 7, caractérisé en ce que les mouvements de travail du dispositif de pompage (1 ; 6, 6') et de l'élément tampon (17) sont accouplés positivement avec un rapport d'accouplement qui peut être présélectionné et qu'on peut éventuellement faire varier pendant l'opération de remplissage.

9. Dispositif selon la revendication 8, caractérisé en ce qu'il est prévu un dispositif de régulation (24, 24') qui règle le débit de remplissage en fonction d'une comparaison valeur de consigne/valeur réelle.

10. Dispositif pour détecter le débit de remplissage de milieux liquides susceptibles de coulée comme, par exemple, une résine de coulée, caractérisé en ce qu'il est prévu un élément tampon (17) muni d'un élément de déplacement (21) qui, en présence d'un accroissement du débit d'arrivée à l'élément tampon (17), s'éloigne pour agrandir le volume d'accumulation de l'élément tampon (17) tandis qu'en présence d'une diminution de débit d'arrivée à l'élément tampon (17), revient en sens inverse pour réduire le volume d'accumulation, et équipé d'un dispositif servant à détecter la variation ou les variations dans le temps du volume d'accumulation de l'élément tampon (17).
